Europäisches Patentamt

European Patent Office

Office européen des brevets

(11) Veröffentlichungsnummer: **0 124 677**

**A2**

(12) **EUROPÄISCHE PATENTANMELDUNG**

(21) Anmeldenummer: 83890119.7

(22) Anmeldetag: 20.07.83

(51) Int. Cl.³: **B 66 C 13/08**

(30) Priorität: 09.05.83 AT 1701/83

(43) Veröffentlichungstag der Anmeldung:
14.11.84 Patentblatt 84/46

(84) Benannte Vertragsstaaten:
BE CH DE FR GB IT LI NL

(71) Anmelder: Lisec, Peter
Bahnhofstrasse 34
A-3363 Amstetten-Hausmening(AT)

(72) Erfinder: Lisec, Peter
Bahnhofstrasse 34
A-3363 Amstetten-Hausmening(AT)

(74) Vertreter: Beer, Otto, Dipl.-Ing. et al,
Lindengasse 8
A-1071 Wien(AT)

(54) Lasthebevorrichtung.

(57) Eine Vorrichtung (1) zum Heben und Senken von Lasten besitzt einen Antrieb (2), dem eine Steuerungseinrichtung (12, 15) zugeordnet ist. Der Steuerungseinrichtung (12, 15) ist mindestens ein an der Vorrichtung (1) vorgesehener Führungs- bzw. Haltegriff (20) zugeordnet und der Antrieb (2) ist über die Steuerungseinrichtung (12, 15) beim Nach-oben-belasten des Führungs- bzw. Haltegriffes (20) im Sinne des Hebens und beim Nach-unten-belasten des Führungs- bzw. Haltegriffes (20) im Sinne des Senkens der Vorrichtung (1) ansteuerbar.

FIG.2

EP 0 124 677 A2

## Lasthebevorrichtung

Die Erfindung betrifft eine Vorrichtung zum Heben und Senken von Lasten mit einem Antrieb, dem eine Steuerungseinrichtung zugeordnet ist.

Derartige Lasthebevorrichtungen besitzen oft einen Druckmittelzylinder, der über seine Kolbenstange aufgehängt ist und mit dessen heb- bzw. senkbarem Mantel Einrichtungen zum Erfassen der zu hebenden Last verbunden sind, und mindestens einen Führungs- bzw. Haltegriff.

Bei den bekannten Hebezeugen und auch bei Hebeeinrichtungen der eingangs genannten Gattung werden die das Heben und Senken des Hebezeuges bzw. der Last steuernden Ventile über manchmal am Hebezug angeordnete Schalter gesteuert. Dies ist insoferne nachteilig, als das Steuern eine große Aufmerksamkeit und Geschicklichkeit der Bedienungsperson voraussetzt und man häufig gezwungen ist, sich an die gewünschte Endstellung, z. B. beim Absetzen von Lasten, heranzutasten, indem man die Ventile ganz kurzzeitig öffnet.

Der Erfindung liegt die Aufgabe zugrunde, eine Hebevorrichtung der eingangs genannten Gattung anzugeben, welche die geschilderten Nachteile nicht aufweist und bei welcher das Heben und Senken von Lasten ebenso wie das Heben und Senken der nicht belasteten Hebevorrichtung problemlos steuerbar ist.

Dies wird erfindungsgemäß dadurch erreicht, daß der Steuerungseinrichtung des Antriebes der Vorrichtung mindestens ein an der Vorrichtung vorgesehener Führungs- bzw. Haltegriff zuge-ordnet ist, und daß der Antrieb über die Steuerungseinrichtung beim nach oben Belasten des Führungs-bzw. Haltegriffes im Sinne des Hebens und beim nach unten Belasten des Führungs- bzw. Haltegriffes im Sinne des Senkens der Vorrichtung ansteuerbar ist.

Als Antrieb für die erfindungsgemäße Vorrichtung können beliebige Motoren, so z. B. Elektromotoren, pneumatische oder hydraulische Druckmittelzylinder, verwendet werden.

Bei der erfindungsgemäßen Lasthebevorrichtung genügt es, zum Heben und Senken der Lasthebevorrichtung an den Führungs- bzw. Haltegriffen nach oben bzw. nach unten zu drücken. Bei der erfindungsgemäßen Lasthebevorrichtung wird die natürliche Tendenz der Bedienungsperson ausgenützt, am Führungs- bzw. Haltegriff der Lasthebevorrichtung anzuheben, wenn gehoben bzw. nach unten zu drücken, wenn gesenkt werden soll. Der Hebe- bzw. Absenkvorgang von Lasten erfolgt daher ohne Denkarbeit, lediglich aufgrund des rein instinktiv auf den bzw. die Führungs- bzw. Haltegriffe ausge-übten Druckes nach oben oder nach unten. Bei Verwendung der erfindungsgemäßem Lasthebevorrichtung hat man das Gefühl, die Lasthebevorrichtung selbst und die zu hebende Last sei praktisch schwerelos, da sie jedem Druck der Hand sofort folgt.

Bei einer Lasthebevorrichtung mit einem Druckmittelzylinder, der über seine Kolbenstange aufgehängt ist und mit dessen heb- bzw. senkbarem Mantel Einrichtungen zum Erfassen der zu hebenden Last verbunden sind, und mit mindestens einem Führungs- bzw. Haltegriff, ist im Rahmen der Erfindung bevorzugt vorgesehen, daß der Führungs- bzw. Haltegriff gegenüber dem Mantel des Druckmittelzylinders in Richtung der Längsachse des Druckmittelzylinders beweglich ist und daß die das Beaufschlagen des Druckmittelzylinders mit Druckmedium bzw. dessen Entlastung steuernden Ventile mit dem Führungs- bzw. Haltegriff gekuppelt sind, so daß durch Nach-oben bzw. Nach-unten-drücken des Führungs- bzw. Haltegriffes das Heben bzw. Senken der Lasthebevorrichtung auslösbar ist.

In einer praktischen Ausführungsform kann sich die Lasthebevorrichtung erfindungsgemäß dadurch auszeichnen, daß der Druckmittelzylinder ein Hydraulikzylinder ist, der mit Hydraulikmedium aus einem über ein Ventil mit Druckluft beaufschlagbaren Vorratsbehälter über ein Rückschlagventil beaufschlagbar ist und daß parallel zum Rückschlagventil ein über den Führungs- bzw. Haltegriff betätigbares Rückströmventil vorgesehen ist, wobei das Ventil bei nach oben gedrücktem Führungs- bzw. Haltegriff und das Rückströmventil bei nach unten gedrücktem Führungs- bzw. Haltegriff geöffnet ist.

Weiters kann im Rahmen der Erfindung vorgesehen sein, daß der Führungs- bzw. Haltegriff an einem gegenüber dem Mantel des Druckmittelzylinders entgegen der Kraft von Federn verschiebbaren Gehäuse der Lasthebevorrichtung befestigt ist. In diesem Zusammenhang bewährt sich eine Ausführungsform, bei welcher vorgesehen ist, daß das Gehäuse bzw. der Führungs- bzw. Haltegriff von Federn in eine Mittenlage gedrückt wird, in der das Ventil in der zum Vorratsbehälter für das Druckmedium führenden Luftleitung und das Rückströmventil in der Leitung zwischen Druckmittelzylinder und Vorratsbehälter geschlossen sind. Diese Ausführungsform stellt sicher, daß bei nicht nach oben oder nach unten belastetem Führungs- bzw. Haltegriff die Lasthebevorrichtung weder gehoben noch gesenkt wird.

Im Sinne einer weiteren Vereinfachung und Erhöhung der Sicherheit der Bedienung der erfindungsgemäßen Lasthebevorrichtung kann vorgesehen sein, daß mit dem Gehäuse der Lasthebevorrichtung ein zwischen die Betätigungsorgange der Ventile eingreifender Steuerfinger vorgesehen ist.

Weitere Einzelheiten und Merkmale der Erfindung ergeben sich aus der nachstehenden Beschreibung der in den Zeichnungen wiedergegebenen Ausführungsbeispiele. Es zeigt

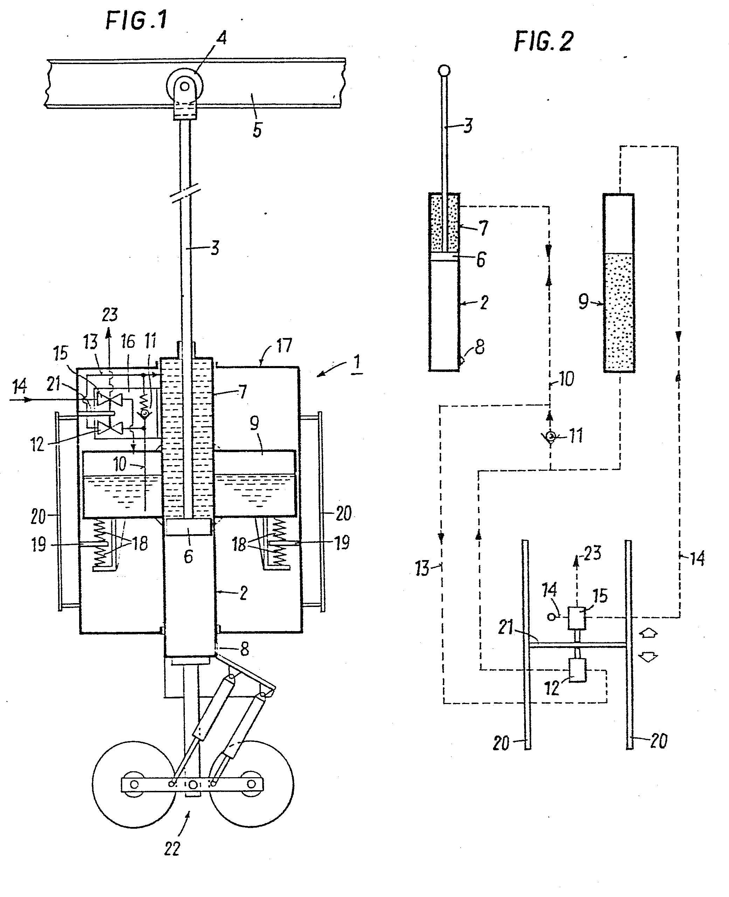

Figur 1 schematisch und im Schnitt eine erste Ausführungsform,

Figur 2 ein Prinzipschaltbild und

Figuren 3 und 4 in Schrägansichten eine zweite Ausführungsform.

Eine Lasthebevorrichtung 1 umfaßt einen im gezeigten
Ausführungsbeispiel als Hydraulikzylinder 2 ausgebildeten
Druckmittelzylinder. Der Hydraulikzylinder 2 ist über seine
Kolbenstange 3, an deren freiem Ende Laufrollen 4 vorgesehen
sind, an einer Tragschiene 5 aufgehängt, so daß die Lasthebevorrichtung 1 hin- und hergeschoben werden kann.

Der über dem Kolben 6 des Hydraulikzylinders 2 liegende,
vom Mantel 7 umschlossene Innenraum ist mit Öl gefüllt, wogegen der unter dem Kolben 6 liegende Raum mit Luft gefüllt
und am unteren Ende des Mantels 7 eine Öffnung 8 vorgesehen
ist, die das Atmen des Hydraulikzylinders 2 gestattet.

Weiters ist ein Ölvorratsbehälter 9 vorgesehen, der z. B. am
Mantel 7 befestigt ist, von dem eine Leitung 10 über ein
Rückschlagventil 11 zum Hydraulikzylinder 2 führt. Parallel
zum Rückschlagventil 11 ist ein Rückströmventil 12 vorgesehen, das bei Betätigung die Rückströmleitung 13 freigibt,
so daß Öl aus dem Hydraulikzylinder 2 in den Vorratsbehälter
9 zurückströmen kann.

In den oberhalb des Ölvorrates im Vorratsbehälter 9 liegenden
Luftraum mündet eine Luftleitung 14 aus, in der ein Ventil 15
vorgesehen ist. Sowohl das Rückströmventil 12 als auch das
Luftventil 15 sind beispielsweise über einen Träger 16 am
Mantel 7 des Hydraulikzylinders 2 befestigt. Die bis jetzt
beschriebene Anordnung aus Hydraulikzylinder 2, Ölvorratsbehälter 9 und den verschiedenen Ventilen und Versorgungsleitungen wird von einem Gehäuse 17 umgeben, das gegenüber
dem Mantel 7 des Hydraulikzylinders 2 auf- und abverschiebbar zwischen Federn 18 gelagert ist. Dabei ist die Anordnung
so getroffen, daß vom Gehäuse 17 nach innnen weisende Laschen

0124677

- 5 -

19 zwischen indirekt am Mantel 7 des Hydraulikzylinders 2 abgestützte Federn 18 eingreifen. Durch diese Anordnung ist das Gehäuse 17 gegenüber dem Mantel des Hydraulikzylinders entgegen der Kraft der Federn 18 nach oben oder nach unten verschiebbar. An der Außenseite des Gehäuses 17 sind im gezeigten Ausführungsbeispiel zwei Führungs- bzw. Haltegriffe 20 vorgesehen.

Durch Nach-oben- bzw. Nach-unten-drücken der Führungs- bzw. Haltegriffe 20 wird das Gehäuse 17 gegenüber dem Mantel 7 des Hydraulikzylinders 2 mehr oder weniger weit nach oben bzw. nach unten verschoben. Diese Relativbewegung zwischen den Führungs- bzw. Haltegriffen 20 und den am Mantel 7 des Hydraulikzylinders 2 starr befestigten Ventilen 12 und 15 wird zur Steuerung derselben ausgenützt. Hiezu ist an der Innenseite des Gehäuses 17 ein Steuerfinger 21 befestigt, der den Steuerorganen der Ventile 12 und 15 zugeordnet ist. Die Anordnung ist dabei so getroffen, daß beim Nach-oben-drücken der Führungs- bzw. Haltegriffe 20 das in der Druckluftleitung 14 vorgesehene Luftventil 15 geöffnet und Druckluft in den Ölvorratsbehälter strömt. Hiedurch wird in weiterer Folge Öl in den Hydraulikzylinder 2 gedrückt und die Hebevorrichtung 1 gegebenenfalls zusammen mit einer an ihrer Einrichtung 22 zum Erfassen der Last hängenden Last solange angehoben, als an den Führungs- bzw. Haltegriffen 20 nach oben gedrückt wird (nur solange wirkt der Steuerfinger 21 auf das Steuerorgan des Luftventils 15 im Sinne einer Öffnung desselben ein). Wird an den Führungs- bzw. Haltegriffen hingegen nach unten gedrückt, dann wirkt der Steuerfinger 21 auf das Steuerorgan des Rückströmventils 12 ein und Öl strömt aus dem Hydraulikzylinder 2 in den Ölvorratsbehälter 9 zurück. Gleichzeitig wird ein Entlüftungsventil geöffnet, um die im Ölvorratsbehälter 9 komprimierte Luft aus diesem abzulassen. Dieses Entlüftungsventil kann ein vom Luftventil 15 getrenntes Ventil sein oder aber, wie im gezeigten Ausführungsbeispiel, mit diesem kombiniert sein. Im gezeigten Ausführungsbeispiel ist das Entlüftungsventil 15 so ausgebildet, daß ein Steuerorgan beim Nach-unten-bewegen des Steuerfingers 21 die Freigabe einer Luftablaßleitung 23 auslöst.

Die Führungs- bzw. Haltegriffe der erfindungsgemäßen Lasthebevorrichtung dienen somit nicht nur zum Verschieben der Lasthebevorrichtung entlang der Tragschiene, sondern auch der Steuerung des Hebe- bzw. Absenkvorganges. Dabei kann die Anordnung so getroffen werden, daß die Ventile 14 und 15 progressiv öffnende Ventile sind, die bei stärkerem Druck auf die Führungs- bzw. Haltegriffe und damit erhöhter Verlagerung des Steuerfingers 21 zunehmend weiter öffnen. Es kann damit durch stärkeren Druck auf die Führungs- bzw. Haltegriffe 20 nach oben ein rascheres Heben und umgekehrt ein rascheres Senken der Lasthebevorrichtung 1 bewirkt werden. In der Gleichgewichtsstellung, d. h. bei weder nach oben noch nach unten belasteten Führungs- bzw. Haltegriffen, sind alle Ventile 11, 12 und 15 geschlossen, so daß sich die Lasthebevorrichtung weder hebt noch senkt.

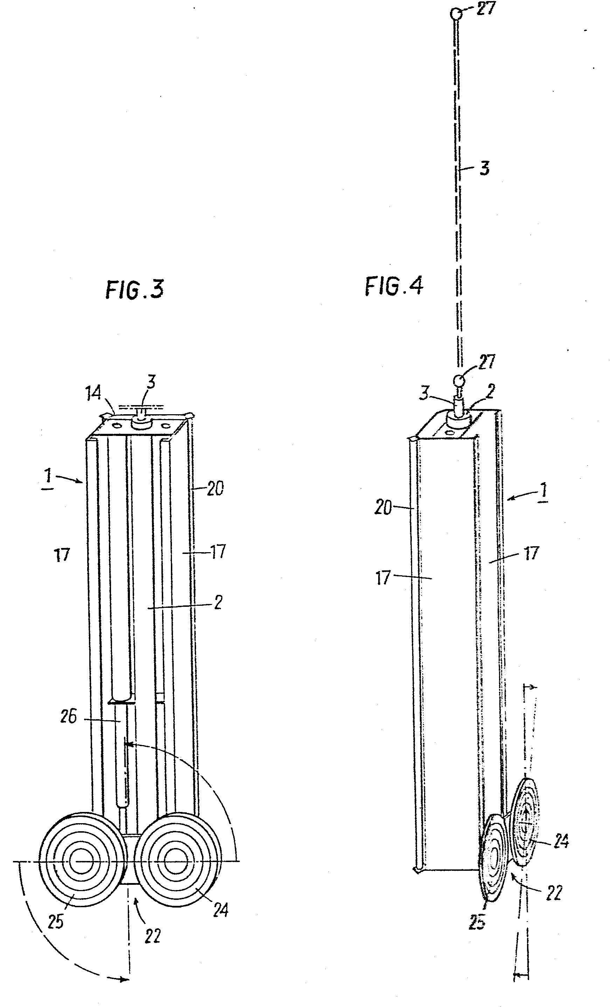

Die in den Figuren 3 und 4 gezeigte Ausführungsform der Lasthebevorrichtung 1, bei welcher das obere Ende der Kolbenstange 3 über einen Gelenkkopf 27 mit den nicht gezeigten Laufrollen 4 verbunden ist, ist besonders für den Einsatz bei automatischen, vertikalen Versiegelungsanlagen für Isolierglaselemente konstruiert. Die besondere Konstruktion des hydromechanischen Hebers ermöglicht, daß Isolierglaselemente ruckfrei mit beliebiger Geschwindigkeit gehoben oder gesenkt werden können. Da für das Heben und Senken keine Schalter betätigt werden müssen, ist eine optimale und schnelle Manipulation der Isolierglaselemente möglich. Die Saugteller 24, 25 können mit Hilfe eines Druckmittelzylinders 26, vorzugsweise stufenlos um eine senkrecht zur Ebene eines von den Saugtellern 24, 25 erfaßten Isolierglaselementes verlaufende Achse z. B. um 90° verschwenkt werden, so daß das Isolierglaselement so abgesetzt werden kann, wie es jeweils am günstigsten ist.

Zusätzlich sind die Saugteller 24, 25 so gelagert, daß sie um eine horizontale, parallel zur Ebene des Isolierglaselementes verlaufende Achse z. B. um 6° gekippt werden können. Durch die Schrägstellung /wird das auf die Glastafel des Isolierglaselementes, an der die Saugteller angreifen, einwirkende Biegemoment verkleinert, weil sich der oberhalb der Saugteller 24, 25 befindliche Bereich des Isolierglaselementes näher beim Mantel 17 der Lasthebevorrichtung 1 befindet.

Patentansprüche

1. Vorrichtung (1) zum Heben und Senken von Lasten mit einem Antrieb (2), dem eine Steuerungseinrichtung (12, 15) zugeordnet ist, dadurch gekennzeichnet, daß der Steuerungseinrichtung (12, 15) des Antriebes (2) der Vorrichtung (1) mindestens ein an der Vorrichtung (1) vorgesehener Führungs- bzw. Haltegriff (20) zugeordnet ist, und daß der Antrieb (2) über die Steuerungseinrichtung (12, 15) beim Nach-oben-belasten des Führungs- bzw. Haltegriffes (20) im Sinne des Hebens und beim Nach-unten-belasten des Führungs- bzw. Haltegriffes (20) im Sinne des Senkens der Vorrichtung (1) ansteuerbar ist.

2. Lasthebevorrichtung nach Anspruch 1, mit einem Druckmittelzylinder (2), der über seine Kolbenstange (3) aufgehängt ist und mit dessen heb- bzw. senkbarem Mantel (7) Einrichtungen (22) zum Erfassen der zu hebenden Last verbunden ist, und mit mindestens einem Führungs- bzw. Haltegriff (20), dadurch gekennzeichnet, daß der Führungs- bzw. Haltegriff (20) gegenüber dem Mantel (7) des Druckmittelzylinders (2) in Richtung der Längsachse des Druckmittelzylinders (2) beweglich ist und daß die das Beaufschlagen des Druckmittelzylinders (2) mit Druckmedium bzw. dessen Entlastung steuernden Ventile (12, 15) mit dem Führungs- bzw. Haltegriff (20) gekuppelt sind, so daß durch Nach-oben bzw. Nach-unten-drücken des Führungs- bzw. Haltegriffes (20) das Heben bzw. Senken der Lasthebevorrichtung (1) auslösbar ist.

3. Lasthebevorrichtung nach Anspruch 1 oder 2, dadurch gekennzeichnet, daß der Druckmittelzylinder ein Hyraulikzylinder (2) ist, der mit Hydraulikmedium aus einem über ein Ventil (15) mit Druckluft beaufschlagbaren Vorratsbehälter (9) über ein Rückschlagventil (11) beaufschlagbar ist und daß parallel zum Rückschlagventil (11) ein über den Führungs- bzw. Haltegriff (20) betätigbares Rückströmventil (12) vorgesehen ist, wobei das Ventil (15) bei nach oben gedrücktem Führungs- bzw. Haltegriff (20) und das Rückströmventil (12) bei nach unten gedrücktem Führungs- bzw. Haltegriff (20) geöffnet ist.

4. Lasthebevorrichtung nach einem der Ansprüche 1 bis 3, dadurch gekennzeichnet, daß der Führungs- bzw. Haltegriff an einem gegenüber dem Mantel (7) des Druckmittelzylinders (2) entgegen der Kraft von Federn (18) verschiebbaren Gehäuse (17) der Lasthebevorrichtung (1) vorgesehen ist.

5. Lasthebevorrichtung nach Anspruch 4, dadurch gekennzeichnet, daß das Gehäuse (17) bzw. der Führungs- bzw. Haltegriff (20) von Federn (18) in eine Mittenlage gedrückt wird, in der das Ventil (15) in der zum Vorratsbehälter (9) für das Druckmedium führenden Luftleitung (14) und das Rückströmventil (12) in der Leitung zwischen Druckmittelzylinder (2) und Vorratsbehälter (9) geschlossen sind.

6. Lasthebevorrichtung nach einem der Ansprüche 1 bis 5, dadurch gekennzeichnet, daß dem Vorratsbehälter (9) für das Druckmedium ein beim Senken der Lasthebevorrichtung offenes Entlüftungsventil (15) zugeordnet ist.

7. Lasthebevorrichtung nach Anspruch 6, dadurch gekennzeichnet, daß das Entlüftungsventil des Vorratsbehälters (9) mit dem in der Leitung (14) für Druckluft vorgesehenen Ventil (15) kombiniert ist.

8. Lasthebevorrichtung nach Anspruch 7, dadurch gekennzeichnet, daß das Ventil (15) als Dreiwegeventil ausgebildet ist.

9. Lasthebevorrichtung nach einem der Ansprüche 1 bis 8, dadurch gekennzeichnet, daß das obere Ende der Kolbenstange (3) über Laufrollen (4) an bzw. in einer Trage-

schiene (5) verschiebbar gehalten ist.

10. Lasthebevorrichtung nach einem der Ansprüche 1 bis 9, dadurch gekennzeichnet, daß die das Heben und Senken der Lasthebevorrichtung (1) steuernden Ventile (12,15) mit dem Mantel (7) des Druckmittelzylinders (2) starr verbunden sind.

11. Lasthebevorrichtung nach Anspruch 10, dadurch gekennzeichnet, daß mit dem Gehäuse (17) der Lasthebevorrichtung (1) ein zwischen die Betätigungsorgane der Ventile (12,15) eingreifender Steuerfinger (21) vorgesehen ist.

12. Lasthebevorrichtung nach einem der Ansprüche 1 bis 11, dadurch gekennzeichnet, daß zwei etwa parallel zur Achse des Druckmittelzylinders (2) verlaufende Führungs- bzw. Haltegriffe (20) vorgesehen sind.

13. Lasthebevorrichtung nach einem der Ansprüche 1 bis 12, dadurch gekennzeichnet, daß für das Erfassen tafelförmiger Elemente mindestens ein Saugteller (24, 25) vorgesehen ist, der gegenüber der Lasthebevorrichtung (1) um eine zur Ebene des Saugtellers (24,25) senkrechte Achse verdrehbar ist.

14. Lasthebevorrichtung nach Anspruch 13, dadurch gekennzeichnet, daß der Saugteller (24,25) um eine horizontale, parallel zur Ebene des Saugtellers (24,25) verlaufende Achse mit seinem oberen Abschnitt zur Lasthebevorrichtung (1) hin kippbar ist.

FIG.1

FIG.2

0124677

FIG.3

FIG.4